# EUROPÄISCHE PATENTANMELDUNG

(11) **EP 2 340 909 A1**
(43) Veröffentlichungstag der Anmeldung: **06.07.2011**
(21) Anmeldenummer: 09016098.7
(22) Anmeldetag: 29.12.2009
(51) Int. Cl.: B23K 11/14, B23P 6/04, F01D 5/00

(54) **Verschließen von kreisrunden und ovalen Öffnungen im Kronenboden von Turbinenlaufschaufeln mittels Kegelstopfen**

(71) Anmelder: SIEMENS AKTIENGESELLSCHAFT, 80333 München (DE)
(72) Erfinder: Arjakine, Nikolai, 10555 Berlin (DE); Melzer-Jokisch, Torsten, 15366 Neuenhagen bei Berlin (DE); Settegast, Silke, 10439 Berlin (DE); Thomaidis, Dimitrios, Dr., 10367 Berlin (DE)

(57) **Zusammenfassung**

Durch eine verbesserte Geometrie eines Stopfens, der zum Verschließen eines Lochs verwendet wird, wird das Widerstandsschweißverfahren automatisierbar und verringert die Wärmeeinflusszone nach dem Schweißen, so dass das Bauteil auch verbesserte Eigenschaften aufweist.

## Beschreibung

Die Erfindung betrifft das Verschließen von Löchern in Bauteilen mittels eines Stopfens und den dafür notwendigen Stopfen.

Löcher können auf verschiedene Art und Weise wieder verschlossen werden. Bei Gussteilen zur Herstellung von hohlen Bauteilen gibt es oft fertigungsbedingte Löcher, die wieder verschlossen werden sollen. Dazu wird oft ein Stopfen verwendet, der an seiner Umfangsfläche mit einer Schweißnaht versehen wird, so dass er an dem Bauteil dauerhaft befestigt ist. Dies ist jedoch zeitaufwändig, insbesondere deswegen, weil es manuell durchgeführt werden muss.

Es ist daher Aufgabe der Erfindung ein Verfahren und einen Stopfen aufzuzeigen, mit dem das Verfahren vereinfacht und automatisiert durchgeführt werden kann.

Die Aufgabe wird gelöst durch einen Stopfen gemäß Anspruch 1 und ein Verfahren gemäß Anspruch 9.

In den Unteransprüchen sind weitere vorteilhafte Maßnahmen aufgelistet, die beliebig miteinander kombiniert werden können, um weitere Vorteile zu erzielen.

Es zeigen:
- Figur 1: ein Bauteil mit einem zu verschließenden Loch und ein Stopfen,
- Figur 2, 3, 4: verschiedene Ausführungsformen von Stopfen,
- Figur 5, 6: Stopfen vor und nach dem Schweißen,
- Figur 7: perspektivisch eine Turbinenschaufel,

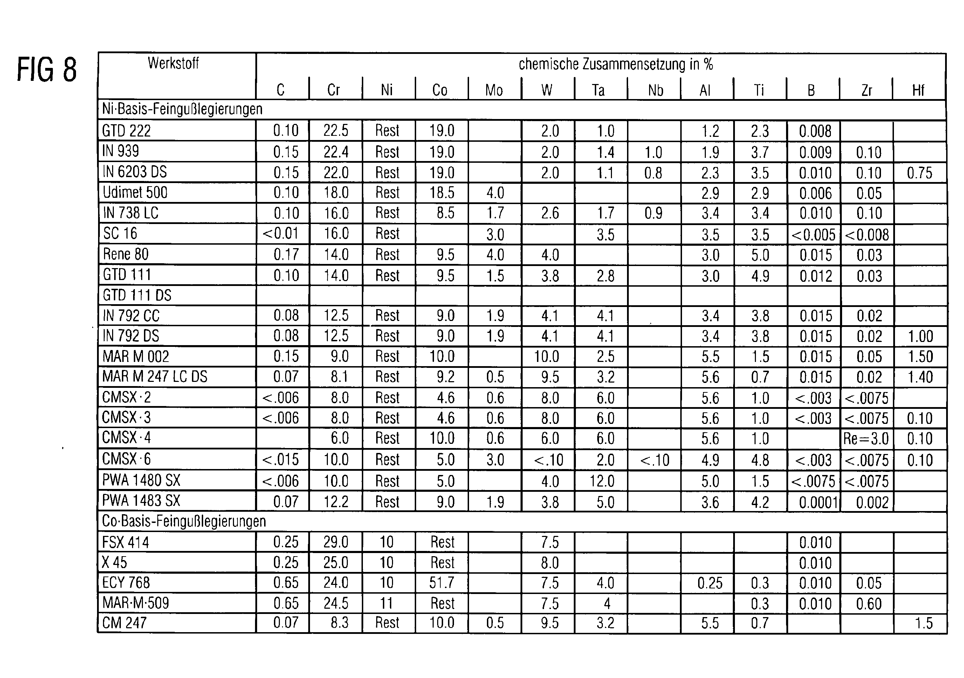

- Figur 8: eine Liste von Superlegierungen.

Die Beschreibung und die Figuren stellen nur Ausführungsbeispiele der Erfindung dar.

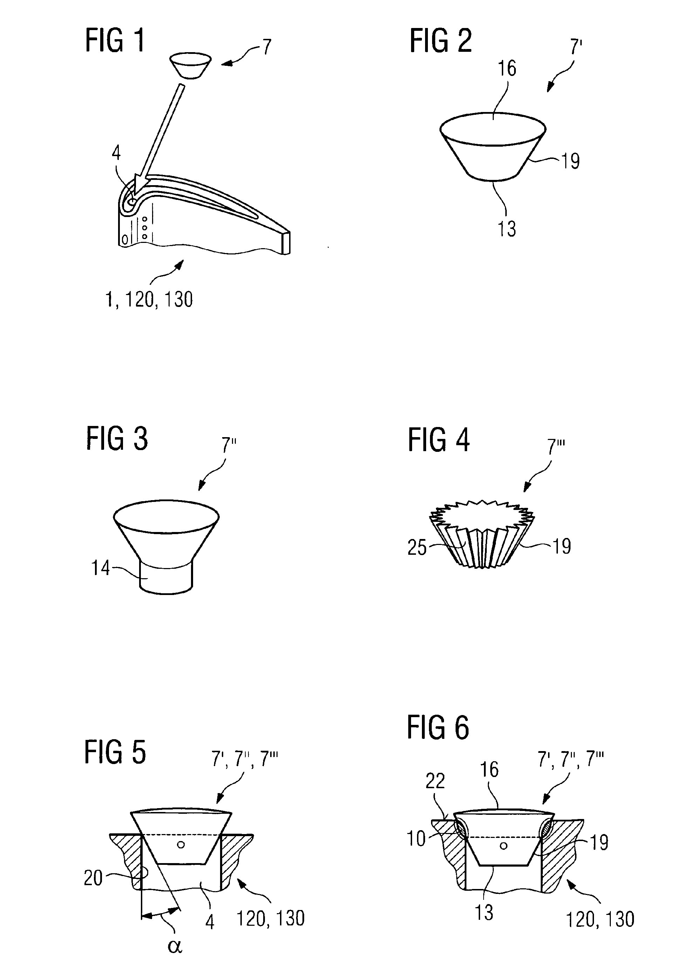

Figur 1 zeigt eine Spitze einer Turbinenschaufel 120, 130 als beispielhaft zu erläuterndes Bauteil, das ein zu verschließendes Loch 4 aufweist, das mittels eines Stopfens 7 verschlossen werden soll.

Dies erfolgt mittels Widerstandsschweißen, insbesondere durch elektrisches Widerstandsschweißen und vorzugsweise auch unter Anwendung von Druck.

Denkbar ist auch ein mechanisches Verschweißen durch Reibungswärme.

Figur 2 zeigt einen ersten Stopfen 7', der vorzugsweise als Kegelstumpf ausgebildet ist, d.h. seine beiden Stirnflächen der Stirnoberseite 16 und der Stirnunterseite 13 sind kreisförmig oder auch oval ausgebildet.

Die Seitenfläche 19 verläuft unter einem stumpfen Winkel zur Unterseite 13.

Im Allgemeinen ist der Stopfen 7, 7' in seiner Querschnittsform der Querschnittsform des zu verschließenden Lochs angepasst, kann also auch rechteckig sein.

Figur 3 zeigt einen weiteren Stopfen 7'', bei dem ausgehend von Figur 2 an der kleineren Stirnunterseite 13 noch ein zylinderförmiger oder ovalförmiger Ansatz 14 vorhanden ist, dessen Durchmesser vorzugsweise der kleineren Stirnfläche 13 entspricht. Der Ansatz 14 setzt sich vorzugsweise gleichförmig fort. Dadurch kann der Schwerpunkt verlagert werden.

Figur 4 zeigt eine weitere Variante des Stopfens 7''', bei dem die seitliche Umfangsfläche 19 des Stopfens 7''' ausgehend von Figur 2 Rillen 25 aufweist, ein so genannter Sternkegelstopfen. Eine solche Umfangsfläche 19 kann auch in dem Stopfen gemäß Figur 3 vorhanden sein.

Beim Widerstandsschweißen wird durch solche Stopfen 7, 7', 7'', ... die Strom- und Schmelzzuführung einfacherer und konstanter.

Vorzugsweise wird ein Winkel von 45° ± 10° verwendet.

Figur 5 zeigt im Querschnitt einen Stopfen 7, 7', 7'', der vor dem Schweißen zuerst lose in dem Loch 4 einsitzt.

Der Winkel a zwischen den Stopfen 7', 7" zur Innenfläche 20 des Lochs 4 wird möglichst groß gewählt. Je steiler der Winkel α ist, desto größer wird die Fläche, die aufschmilzt: vorzugsweise ist α ≥5° und α < 90°.

Durch das Widerstandspunktschweißen ist das Verfahren mit dem Stopfen 7, 7', 7'' automatisierbar und sehr schnell.

Vorzugsweise gibt es einen Überstand von dem Stopfen 7, 7', 7" über die Oberfläche 22 des Bauteils 120, 130 um das Loch 4 herum.

Figur 6 zeigt einen eingeschweißten Stopfen 7', 7'', 7'''_{.} Durch das Schweißen ist eine Schmelzzone 10 in Umfangsfläche im Bauteil und Stopfen 7', 7'', ... entstanden. Diese Schmelzzone 10 hat eine minimale Wärmeinflusszone.

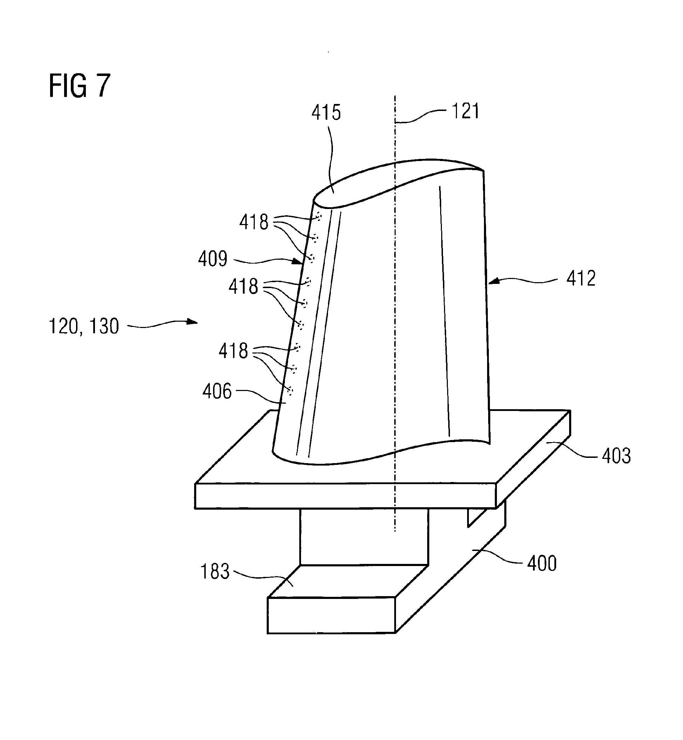

Die Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0, 6Y-0, 7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1, 5Re.

Auf der MCrAlX kann noch eine Wärmedämmschicht vorhanden sein, die vorzugsweise die äußerste Schicht ist, und besteht beispielsweise aus ZrO Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Stopfen (7, 7', 7'') zum Verschließen eines Lochs (4) mittels Widerstandsschweißen,
der (7, 7', ...) eine Oberseite (16) und eine Unterseite (13) aufweist,
dessen seitliche Umfangsfläche (19) zwischen Oberseite (16) und Unterseite (13) unter einem stumpfen Winkel zur Unterseite (13) verläuft.

2. Stopfen nach Anspruch 1,
der zumindest teilweise als Kegel ausgebildet ist, insbesondere vollständig ein Kegel ist.

3. Stopfen nach Anspruch 2,
bei dem der Kegel ein Rund- oder Ovalkegel ist.

4. Stopfen nach Anspruch 1, 2 oder 3,
der eine flache Stirnunterseite (13) aufweist.

5. Stopfen nach Anspruch 1, 2, 3 oder 4,
der eine flache Stirnoberseite (16) aufweist.

6. Stopfen nach Anspruch 4 oder 5,
der auf seiner kleineren Stirnunterseite (13) eine Verlängerung aufweist,
insbesondere mit dem Querschnitt der kleineren Stirnfläche (13) aufweist.

7. Stopfen nach Anspruch 1, 2, 3, 4, 5 oder 6,
bei dem die Seitenfläche (19) des Stopfens Rillen aufweist.

8. Stopfen nach einem oder mehreren der vorherigen Ansprüche 1 bis 7,
der metallisch ist.

9. Verfahren zum Verschließen eines Lochs (4) in einem Bauteil (120, 130) mittels Widerstandsschweißen,
insbesondere mittels elektrischem Widerstandsschweißen, bei dem ein Stopfen (7, 7', 7'') nach Anspruch 1, 2, 3, 4, 5, 6, 7 oder 8 verwendet wird.

10. Verfahren nach Anspruch 9,
bei dem der Stopfen (7, 7', 7'') vor dem Schweißen über eine Oberfläche (22) des Bauteils (120, 130) herausragt.

11. Verfahren nach Anspruch 9 oder 10,
bei dem ein Winkel (α) zwischen seitlicher Umfangsfläche (19) des Stopfens(7', 7'', 7''') und Innenfläche (20) des Lochs (4) möglichst groß ist,
vorzugsweise ≥ 45°.
